# NEUE EUROPÄISCHE PATENTSCHRIFT

(11) **EP 1 858 334 B2**
(45) Veröffentlichungstag und Bekanntmachung des Hinweises auf die Entscheidung über den Einspruch: **11.06.2014**
(45) Hinweis auf die Patenterteilung: 27.10.2010
(21) Anmeldenummer: 06725022.5
(22) Anmeldetag: 13.03.2006
(51) Int. Cl.: A21C 13/02, A21B 3/07

(54) **VERFAHREN UND VORRICHTUNG ZUR LAGERUNG, BEHANDLUNG UND AUSGABE VON LEBENSMITTELN MITTELS TRÄGERN**
METHOD AND DEVICE FOR STORING, TREATING AND DISPENSING ITEMS OF FOOD BY MEANS OF SUPPORTS
PROCEDE ET DISPOSITIF DE STOCKAGE, TRAITEMENT ET DISTRIBUTION D'ALIMENTS PAR L'INTERMEDIAIRE DE SUPPORTS

(30) Priorität: 16.03.2005 DE 102005012536
(43) Veröffentlichungstag der Anmeldung: 28.11.2007
(73) Patentinhaber: R. Weiss Verpackungstechnik GmbH & Co. KG, 74564 Crailsheim (DE)
(72) Erfinder: WEISS, Reinald, 74594 Kressberg (DE)
(74) Vertreter: Schlief, Thomas P.
(86) Internationale Anmeldenummer: PCT/EP2006/060660
(87) Internationale Veröffentlichungsnummer: WO 2006/097448

(56) Entgegenhaltungen:
- EP-A- 0 478 085
- FR-A- 2 824 168
- FR-A1- 2 530 926
- US-A- 2 639 828
- US-A- 3 202 115
- US-A- 5 435 685

## Beschreibung

Die Erfindung betrifft eine Vorrichtung zur Lagerung, Behandlung und Ausgabe von Backwaven gemäß Anspruch 1. Daneben betrifft die vorliegende Erfindung ein Verfahren zur Lagerung, Behandlung und Ausgabe von Lebensmitteln gemäß Anspruch 13. Eine Vorrichtung und ein Verfahren zur Behandlung und Ausgabe von Backwaven sind aus Dokument EP-A-0478085 schon bekannt.

Eine ähnliche Vorrichtung bzw. ein änhliches Verfahren sind aus der US 5,435,685 bekannt. Hierbei werden einzeln in Behälter verpackte Lebensmittel in einem Vorratsraum gespeichert. Mehrere Behälter sind jeweils in einem Regal gelagert, wobei die Regale in dem Vorratsraum umlaufen können. Hierdurch ist es möglich, jeweils eines der Regale einer Fördereinrichtung zuzustellen, welche einen oder mehrere Behälter aus diesem Regal einer Zubereitungseinrichtung und im Anschluss daran einem Ausgabespeicher zuführt. Schließlich zeigt die FR 2530926 eine Backvorrichtung zur Integration in eine automatische Backlinie. Eine Beeinflussung des Trägertransports ist jedoch nicht vorgesehen.

Der Vertrieb von Lebensmitteln, wie beispielsweise Backwaren, erfolgt in konventioneller Weise über Fachgeschäfte, wie Bäckereien oder im Falle von Fleisch- und Wurstwaren über Metzgereien. In zunehmendem Maß erfolgt ein Vertrieb aber auch über andere Wege, wie beispielsweise über Supermärkte. Hierbei ergeben sich unterschiedliche Anforderungen. Eine Forderung ist dabei, daß der Vertrieb möglichst kostengünstig sein muß. Darüber hinaus muß die Ware ansprechend und möglichst frisch sein. Im Hinblick auf die erste Forderung nimmt der Einsatz automatisierter Vorrichtungen zu, da damit kostenaufwendiger Personaleinsatz umgangen wird. Bei der Beurteilung der Kosten ist aber auch der für eine Vorrichtung benötigte Platzbedarf von Bedeutung. Bei modernen Supermärkten wird hierzu beispielsweise eine Kenngröße ermittelt, mit welcher das Verhältnis von Verkaufsfläche zu Umsatz bestimmt und überwacht wird. Ziel ist es dabei, pro bereitgestellter Flächeneinheit Verkaufsfläche einen möglichst hohen Umsatz zu erzielen.

Weiterhin von Bedeutung ist auch eine ansprechende und lebensmitteitechnisch unbedenkliche Bereithaltung und Abgabe der Lebensmittel. Bekannt sind hierzu beispielsweise Backöfen, die in Verkaufsräumen von Supermärkten aufgestellt sind. Diese sind vom Verkaufspersonal zu befüllen und zu entleeren. Nachteilig bei diesen Lösungen ist, daß Verschmutzungen im Verkaufsraum entstehen, jeder Kunde potentiell Zugang zum Backraum hat, die Bedienung personalintensiv ist und die Ware mit mehreren Kunden in Berührung kommen kann.

Aufgabe der vorliegenden Erfindung ist es daher, eine Vorrichtung und ein Verfahren bereitzustellen, mit denen Lebensmittel kostengünstig in lebensmitteltechnisch einwandfreier Weise und zudem möglichst ansprechend für die Kunden bereitzustellen sind.

Gelöst wird diese Aufgabe bei der eingangs genannten Vorrichtung durch die Merkmale des Anspruches 1. Die Einrichtung eines geschlossenen Transportkreislaufes hat mehrere Vorteile. Einer besteht darin, daß es nicht zu einer Ansammlung leerer Träger in einem Bereich der Vorrichtung kommt, sondern diese statt dessen regelmäßig innerhalb der Vorrichtung umlaufen. Hierbei können entleerte Träger zurück zur erneuten Bestückung gelangen, um danach die Behandlung der Lebensmittel erneut zu durchlaufen, bevor sie schließlich wieder an eine Ausgabestelle gelangen. Die Verwendung einer Mehrzahl von Trägern erlaubt es zudem beispielsweise, eine Vielzahl unterschiedlicher Produkte gleichzeitig innerhalb der Vorrichtung handhaben zu können.

Für die Zubereitung von Backwaren hat es sich als besonders vorteilhaft erwiesen, wenn ein Abschnitt ein Backofen, insbesondere ein Durchlaufbackofen, ist. Derartige Backöfen sind besonders zuverlässig, wartungsarm und weisen gleichzeitig bei Bedarf eine ausreichend hohe Kapazität auf. Daneben ist es bei Durchlaufbacköfen besonders einfach, diese automatisiert zu Be- und Entladen. Bei besonders kostengünstigen Ausführungsformen einer erfindungsgemäßen Vorrichtung ist es vorteilhaft, diese manuell zu beschicken. Dies kann beispielsweise in Form eines manuell beschickbaren Backofens realisiert werden. Hierdurch läßt sich der vorrichtungstechnische Aufwand für die ansonsten erforderlichen Automatisierungseinrichtungen einsparen. Bei anderen Anwendungen, die eine besonders hohe Automatisierung und damit Personaleinsparung zum Ziel haben, kann aber eine automatische Beschickung der Vorrichtung bzw. des Backofens vorgesehen sein.

Für den Praxisbetrieb hat es sich bewährt, dass ein Abschnitt ein Speicher für die Träger ist. Die erfindungsgemäße Vorrichtung besteht aus zwei Abschnitten, bestehend aus einem Backofen und einem Speicher für die Träger. So ist es möglich, die auf den Trägern befindlichen Lebensmittel zunächst im Backofen zuzubereiten und anschließend auf den Trägern im Speicher zur Weiterverarbeitung oder Ausgabe bereitzuhalten.

Dabei ist erfindungsgemäß vorgesehen, dass ein Speicher als Ausgabespeicher ausgebildet ist. Dies bedeutet, daß der Speicher beispielsweise über eine Ausgabe und ggf. zusätzlich über eine Bedieneinheit und eine Fördereinrichtung verfügt, welche die auf den Trägern befindlichen Lebensmittel zur Ausgabe hin transportieren.

Ebenso ist vorgesehen, dass ein Speicher als Zuführspeicher ausgebildet ist. Dies bedeutet, daß ein solcher Speicher besonders zur Aufnahme der unbehandelten bzw. nur teilfertig behandelten Lebensmittel geeignet ist. Die im Zuführspeicher auf Trägern vorgehaltenen Lebensmittel werden dort vorgehalten, um nach einem Abruf mittels der Fördereinrichtung zur Behandlung transportiert zu werden, die in dem zuvor genannten Backofen erfolgt.

Für die Qualität der Lebensmittel hat es sich als besonders vorteilhaft erwiesen, wenn wenigstens einer der Speicher klimatisiert ist. Im Rahmen der Erfindung wird unter dem Begriff Lebensmittel grundsätzlich Backwaren verstanden. Im Falle des Zuführspeichers kann dies beispielsweise mittels einer Kühleinrichtung geschehen, welche die Frische der Ausgangsprodukte auch über längere Zeit gewährleistet. Im Falle eines Ausgabespeichers kann die Klimatisierung durch eine Heizung erfolgen, welche die frisch zubereiteten Lebensmittel über einen gewissen Zeitraum nach der Zubereitung warmhält. Zusätzlich können aber auch Be- oder Entfeuchtungsvorrichtungen vorgesehen sein, sofern dies für die Eigenschaften der Lebensmittel von Vorteil ist. Auch der Einsatz von Schutzgasatmosphären ist zur Erhaltung der Lebensmittelqualität denkbar.

Es ist erfindungsgemäß vorgesehen, dass jede Fördereinrichtung eine Mehrzahl von Trägern aufweist, um die Lebensmittel aufzunehmen. So können unterschiedliche Lebensmittel in unterschiedlichen Trägern transportiert werden.

Entsprechend weisen daher auch die verwendeten Speicher eine Mehrzahl von Speicherplätzen für Träger auf, um diese entsprechend speichern zu können. Setzt man eine Mehrzahl von Trägern ein, hat es sich auch als vorteilhaft erwiesen jedem Träger wenigstens eine Information zuzuordnen. Insbesondere eine Information über Laufzeit, Art der Beladung oder den momentanen Standort ist von Vorteil. Auch die Erfassung von Be- und Entladezeiten ist bei manchen Anwendungen sinnvoll. Hierdurch wird eine Verwaltung der Träger wesentlich erleichtert, indem beispielsweise der am nächsten am Ausgabeort liegende Träger mit dem angeforderten Lebensmitteltyp ermittelt und dorthin transportiert werden kann. Bei anderen Kriterien kann beispielsweise darauf geachtet werden, daß das am längsten in der Ausgabeeinheit verweilende Lebensmittel der angeforderten Art zuerst ausgegeben wird. Daneben erlaubt es selbstverständlich auch eine Ermittlung des genau angeforderten Lebensmitteltyps. Vorteilhaft, weil kostensparend ist es dabei auch die Träger einheitlich auszubilden und so zu gestalten, daß sie geeignet sind alle in Frage kommenden Arten von Lebensmitteln aufzunehmen. Bei großen Durchsatzmengen bietet es sich darüber hinaus an, die Träger länglich zu gestalten und quer zur Durchlaufrichtung anzuordnen, so daß sie gleichzeitig mehrere Lebensmittel nebeneinander aufnehmen können.

Besonders platzsparend ist ein Speicher, der mehrere übereinanderliegende Etagen aufweist. Hierdurch kann auf einer relativ geringen Grundfläche eine besonders hohe Menge von Lebensmitteln gespeichert werden. Die Einsparung von Grundfläche ist besonders bei der Aufstellung von Abschnitten der Vorrichtung in Verkaufsräumen von Bedeutung, da nur sehr wenig kostbare Verkaufsfläche benötigt wird, um besonders große Mengen von Lebensmitteln anbieten zu können.

Für die Flexibilität der Einrichtung ist vorgesehen daß die Träger nicht untereinander verbunden sind. Dies bietet größtmögliche Flexibilität bei der Handhabung der befüllten oder leeren Träger. So kann nahezu beliebig auf jeden gewünschten Träger zugegriffen werden. Wenn gewünscht, können Träger auch an anderen Trägern vorbeibewegt und an anderer Stelle wieder abgelegt werden. Damit ist es möglich, in einem Speicher befindliche befüllte Träger nach unterschiedlichsten Kriterien zu selektieren. Ein Kriterium kann darin bestehen, die Lebensmittel mit der längsten Lagerzeit zuerst auszugeben. Ein anderes Kriterium kann aber auch darin bestehen, eine bestimmte Art von Lebensmitteln auszugeben. Durch die gegebene Flexibilität kann dann auf den jeweils ausgewählten Träger zugegriffen werden, ohne daß dabei eine störende Kopplung der Träger untereinander besteht.

Als besonders günstig hat sich erwiesen, wenn die Fördereinrichtung im Bereich des Backofens als Förderband, -gurt oder -kette ausgebildet ist. Eine solche Fördereinrichtung ist besonders robust, wartungsarm, langlebig und hitzebeständig. Zudem ist es möglich, die Träger in einfachster Weise, beispielsweise durch einfaches Aufsetzen auf das Förderband, durch den Backofen zu transportieren.

Für die Qualität der Lebensmittel hat es sich auch als vorteilhaft erwiesen, wenn die Träger bei jedem vollständigen Durchlauf des Transportkreislaufes zumindest einmal den Heizbereich des Backofens durchlaufen. Die Aufheizung der Träger auf hohe Temperaturen von 200°C und mehr bewirkt das Abtöten von Keimen und verhindert die Bildung sonstiger unerwünschter Verunreinigungen, wie beispielsweise Pilzen, was den Trägern eine gewisse Sterilität verleiht.

Bei einer vorteilhaften Ausgestaltung der Fördereinrichtung ist vorgesehen, daß diese zumindest eine Erfassungseinrichtung aufweist, die einen oder mehrere Träger im Speicher gezielt aufnehmen oder abgeben kann. Eine solche Erfassungseinrichtung kann beispielsweise auf Träger zugreifen, die in mehreren übereinanderliegenden Etagen abgelegt sind und diese dann auf dem Durchlaufband des Durchlaufbackofens absetzen. Aber auch an der gegenüberliegenden Seite des Durchlaufbackofens kann eine solche Erfassungseinrichtung angeordnet sein, um die aus dem Durchlaufbackofen austretenden Träger wieder gezielt in einem Ausgabespeicher abzulegen. Die Erfassungseinrichtung dient damit dem gezielten Zugriff auf einzelne innerhalb der Speicher befindliche Träger.

Als ganz besonders vorteilhaft hat es sich erwiesen, wenn zumindest zwischen zwei Abschnitten eine bauliche Trennung mit einer Verbindungsöffnung angeordnet ist. Auf diese Weise ist es möglich, beispielsweise einen Abschnitt in einem Verkaufsraum und einen zweiten Abschnitt in einem dahinterliegenden Lagerraum anzuordnen. Hierdurch werden wesentliche Teile der Vorrichtung aus dem Verkaufsraum ausgelagert und damit wertvolle Verkaufsfläche eingespart. Zudem kann beispielsweise eine Befüllung oder Bestückung der Vorrichtung von der Lagerseite aus erfolgen, wodurch Verschmutzungen im Ladenbereich vermieden werden.

Sicherheitstechnisch vorteilhaft ist es auch, wenn zumindest zwischen zwei Abschnitten eine selbsttätig wirkende Feuerschutzeinrichtung angeordnet ist. Eine solche Feuerschutzeinrichtung kann aus einer Falltür bestehen, welche die zwischen den Abschnitten in der baulichen Trennung vorgesehene Verbindungsöffnung im Brandfall selbsttätig verschließt. Auf diese Weise kann beispielsweise ein Übergreifen des Feuers von einem Lagerraum auf einen Verkaufsraum oder umgekehrt wirkungsvoll vermieden werden. Zudem kann die erfindungsgemäße Vorrichtung auf diese Weise auch unter Bedingungen eingesetzt werden, welche die Verwendung einer solchen Feuerschutzeinrichtung vorschreiben. Dies kann beispielsweise bei der Lagerung von Feuerwerkskörpern in einem der Räume der Fall sein.

Zur Verbesserung der Bedienung der erfindungsgemäßen Vorrichtung hat es sich als vorteilhaft erwiesen, wenn eine Trägerentnahmevorrichtung vorgesehen ist, welche die im Transportkreislauf umlaufenden Träger aus dem Transportkreislauf entnimmt. Eine solche Entnahme von Trägern ist insbesondere dann sinnvoll, wenn es sich um leere Träger handelt. So ist die Entnahme von Trägern beispielsweise dann gewünscht, wenn diese extern, wie etwa mittels einer Spülmaschine gereinigt werden sollen. In diesem Fall kann ein Bediener die Träger an einer bestimmten Stelle ausgeben und sammeln lassen, um sie danach zu reinigen. Eine zweite besonders vorteilhafte Ausführungsform der Erfindung besteht darin, in den Transportkreislauf der Träger eine manuelle Bestückung zwischenzuschalten. Dabei nimmt der Bediener die automatisch ausgegebenen und angesammelten Träger, bestückt diese neu und führt sie wieder dem Zugriffsbereich der Fördereinrichtung zu. Eine derartige Vorrichtung stellt einen besonders guten Kompromiß bei Anlagen mit einer Kapazitätsauslegung, wie sie beispielsweise für Supermärkte geeignet ist, dar. Hierbei kann die Bestückungsarbeit schnell und preiswert manuell erfolgen, wohingegen die übrigen Tätigkeiten durch die Vorrichtung ausgeführt werden.

Zur Erleichterung der Bedienung und zur Einsparung von Bedienzeit ist es ganz besonders vorteilhaft, wenn Mittel zum automatisierten Entleeren der Träger vorgesehen sind. So ist es beispielsweise bei Geschäftsschluß erforderlich, die unfertigen oder halbfertigen Lebensmittel aus der Aufgabeeinrichtung zu entnehmen. Anstatt dies manuell durchzuführen, kann an der Aufgabeeinrichtung eine Öffnung vorgesehen sein, an der die Vorrichtung nach entsprechender Bedienung automatisch alle noch in der zugehörigen Fördereinrichtung befindliche Lebensmittel ausgibt. Diese können dann beispielsweise in einem Kühlraum bis zum nächsten Tag verwahrt und dann erneut aufgegeben werden. Gleiches gilt auch für Fertigprodukte, die sich bei Ladenschluß noch in der Fördereinrichtung oder Speichern der Vorrichtung befinden. Hierbei ist es dann wahlweise möglich, die Ausgabe über den üblicherweise vorgesehenen Ausgabeweg oder ebenfalls über eine separate Sammelausgabe vorzusehen.

Neben der Entleerung der Vorrichtung ist vorteilhafterweise vorgesehen, daß der Transportkreislauf der Fördereinrichtung durch eine Reinigungseinrichtung, insbesondere ein Reinigungsbad, führt. Dabei kann die Reinigungseinrichtung so ausgelegt sein, daß sie vor ihr zum Stillstand kommende leere Träger oder vorbeifahrende leere Träger einzeln reinigt. Dies kann durch Druckluft oder Bürsten geschehen. Eine andere mögliche Ausführungsform sieht vor, daß die Reinigungsvorrichtung erst nach der kompletten Entleerung des zu reinigenden Abschnitts aktiviert wird und dann sämtliche Träger reinigt. Eine solche Reinigung kann auch wieder automatisiert werden und beispielsweise während der Nachtzeiten erfolgen. Bei der Durchführung von Reinigungstätigkeiten an Abschnitten ohne Lebensmittel ist es auch möglich, Reinigungsflüssigkeit bzw. Wasser in Strahlform einzusetzen.

Das darüber hinaus von der Erfindung vorgeschlagene Verfahren der eingangs genannten Art löst die Aufgabe der Erfindung durch die Merkmale des Anspruches 13. Auch mit dem erfindungsgemäßen Verfahren können die vorgenannten erfindungsgemäßen Vorteile erzielt werden.

Weitere Vorteile der Erfindung ergeben sich aus den zugehörigen Unteransprüchen oder sind im Zusammenhang mit den nachfolgenden Ausführungsbeispielen und der Zeichnung beschrieben. Es zeigt darin:
- **Figur 1**: eine erste Ausführungsform einer erfindungsgemäßen Vorrich- tung in einer seitlichen Schnittansicht;
- **Figur 2**: eine zweite Ausführungsform einer erfindungsgemäßen Vor- richtung in einer seitlichen Schnittansicht;
- **Figur 3**: eine Frontansicht eines erfindungsgemäßen Ausgabespeichers;
- **Figur 4**: eine erste Ausführungsform eines Bedienteils;
- **Figur 5**: eine zweite Ausführungsform eines Bedienteils; und
- **Figur 6**: eine dritte Ausführungsform eines Bedienteils.

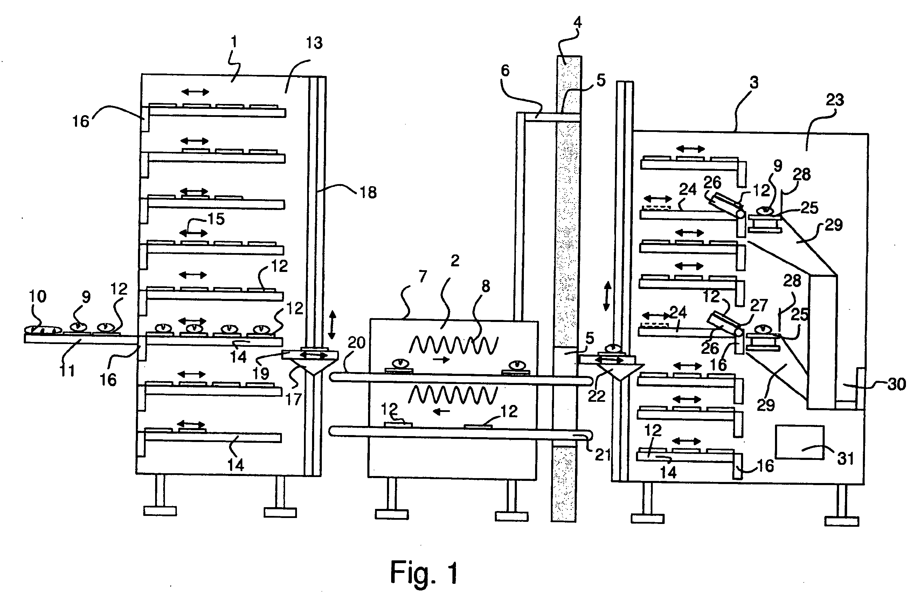

In Figur 1 ist eine erfindungsgemäße Vorrichtung zur Lagerung, Behandlung und Ausgabe von Lebensmitteln in einer seitlichen Schnittansicht dargestellt. Die vorliegende Vorrichtung besteht aus drei Abschnitten 1, 2, 3. Zwischen dem zweiten Abschnitt 2 und dem dritten Abschnitt 3 ist ein bautechnisches Trennmittel in Form einer Wand 4 angeordnet. Links der Wand 4 befindet sich ein Lagerbereich und auf der rechten Seite ein Verkaufsbereich. Die Wand 4 weist eine Verbindungsöffnung 5 auf, durch die der zweite Abschnitt 2 und der dritte Abschnitt 3 miteinander verbunden sind.

Durch eine zweite oberhalb davon angeordnete Verbindungsöffnung 5 erstreckt sich ein Luftabzugsrohr 6, das im zweiten Abschnitt 2 entstehende Abluft zur Oberseite des dritten Abschnittes 3 abführt. Es hat sich nämlich als verkaufsfördernd und damit als vorteilhaft erwiesen, wenn eine Luftführungseinrichtung vorgesehen ist, die Luft aus einem Abschnitt, wie beispielsweise einem Durchlaufbackofen 7 zumindest zeitweise in den Verkaufsraum leitet. Durch den Geruch von frisch zubereiteten Backwaren, den ein Kunde in der Regel sehr intensiv wahrnimmt, wird dieser auf das Angebot von Backwaren hingewiesen. Dies fördert den Absatz der Produkte und sorgt für eine von der Allgemeinheit als angenehm empfundene Duftkulisse. Um eine Belästigung der Kundschaft im Verkaufsbereich durch eine zu intensive Duftkulisse oder durch zu hohe Temperaturen, wie sie beispielsweise im Sommer auftreten, zu vermeiden, ist vorgesehen, daß die Luft aus dem Durchlaufbackofen 7 oder dem dritten Abschnitt 3 wahlweise über einen zweiten Weg ableitbar ist, der nicht in den Verkaufsbereich führt und vorzugsweise auf möglichst direktem Weg ins Freie mündet.

Bei der dargestellten Ausführungsform ist der Durchlaufbackofen 7 decken-und bodenseitig mit Heizungswendeln 8 ausgestattet ist. Für die Erfindung ist es dabei vollkommen unerheblich, ob die Heizung elektrisch, per Gas oder in sonstiger Weise betrieben ist. Besonders gut erkennbar ist in der vorliegenden Figur 1, daß erheblicher Bauraum dem rechts der Wand 4 liegenden Verkaufsbereich eingespart wird. Statt dessen werden die im Verkaufsbereich nicht benötigten Vorrichtungen in einen linksseitig der Wand 4 liegenden Bereich verlegt. Dies kann beispielsweise ein Lagerbereich oder eine sonstige außerhalb des Verkaufsbereiches liegende und nicht allgemein zugängliche Räumlichkeit sein. Es wird dadurch Verkaufsraum im erheblichen Maß eingespart und Verschmutzungen des Verkaufsbereichs, wie sie beispielsweise beim Bestücken der Vorrichtung auftreten, entfallen.

Die Funktionsweise sieht prinzipiell einen Durchlauf von Lebensmitteln von links nach rechts vor. Die Lebensmittel in dem vorliegenden Fall sind Schnittbrötchen 9 und Baguettebrote 10. Sie werden auf einem Aufgabetisch 11 vorgelegt und manuell oder automatisch auf Träger 12 aufgelegt. Der links des Durchlaufbackofens 7 angeordnete erste Abschnitt 1 ist als Zuführspeicher 13 ausgebildet. D. h. im Zuführspeicher 13 werden die halbfertigen bzw. unbehandelten Lebensmittel vor der Behandlung im Durchlaufbackofen 7 gespeichert. Hierzu weist der Zuführspeicher mehrere übereinander angeordnete Speicheretagen 14 auf. Jede der Speicheretagen 14 kann maximal vier Träger 12 aufnehmen. Diese sind auf jeder der Speicheretagen 14 entlang der Pfeile 15 in horizontaler Richtung verfahrbar. Die Horizontalbewegung der Träger 12 wird durch die jeweils links an jeder Speicheretage 14 angeordneten Speicherantriebe 16 angetrieben. Die Speicheretage 14, die sich auf gleicher Höhe wie der Aufgabetisch 11 befindet, dient bei der dargestellten Ausführungsform als Speichereingang. Der Bediener legt die Schnittbrötchen 9 oder die Baguettebrote 10 auf dem Aufgabetisch 11 auf die Träger 12 auf und schiebt sie danach nach rechts auf die Speicheretage 14, von wo aus diese über den Speicherantrieb 16 weiter nach rechts bewegt wird. Auf diese Weise kann ein Bediener frische Lebensmittel zusammen mit den Trägern in den Zuführspeicher 13 eingeben.

Dort angelangt erfolgt der Weitertransport der bestückten Träger 12 mittels einer Erfassungsvorrichtung 17, die sich an der rechten Seite des Zuführspeichers 13 befindet. Die Erfassungsvorrichtung 17 ist sowohl in vertikaler als auch in horizontaler Richtung verfahrbar. Die vertikale Verstellbewegung kann beispielsweise entlang einer Schiene 18 erfolgen. Zum Erfassen der jeweils ganz rechts auf den Speicheretagen 14 liegenden Träger 12 verfährt ein horizontal verfahrbarer Heber 19 der Erfassungsvorrichtung 17 nach links unter den anzuhebenden Träger 12 und anschließend zusammen mit der Erfassungsvorrichtung 17 nach oben, um den jeweiligen Träger 12 anzuheben. Auf diese Weise wird der Träger 12 von der jeweiligen Speicheretage 14 abgehoben. Ein Absetzen des transportierten Trägers 12 erfolgt dann in umgekehrter Weise durch Absetzen auf ein oberes Transportband 20 des Durchlaufbackofens 7. Besonders kompakt kann die Vorrichtung ausgeführt werden, wenn die Erfassungsvorrichtung 17 um die Speicheretagen 14 außen herumgreift oder zwischen diesen hindurchgreift. Gleiches gilt auch für das Zusammenwirken der Erfassungsvorrichtung 17 mit dem oberen Transportband 20 bzw. einem ebenfalls am Durchlaufbackofen 7 vorgesehenen unteren Transportband 21, auf dem die entleerten Träger 12 zurück zum Zuführspeicher 13 transportiert werden.

Mittels der Erfassungsvorrichtung 17 können somit die vom Bediener zugeführten und bestückten Träger 12 innerhalb des Zuführspeichers 13 verteilt und bereitgehalten werden. Bei einem Abruf transportiert die Erfassungsvorrichtung 17 die bestückten Träger 12 dann zum oberen Transportband 20 und sie durchlaufen den Durchlaufbackofen 7. An der rechten Seite der Transportbänder 20, 21 ist eine zweite Erfassungsvorrichtung 22 vorgesehen, welche die bestückten und behandelten Lebensmittel zusammen mit den Trägern 12 in den als Ausgabespeicher 23 ausgebildeten Abschnitt 3 transportiert. Innerhalb des Ausgabespeichers 23 sind wiederum mehrere Speicheretagen 14 übereinander angeordnet. Die Speicheretagen 14 im Ausgabespeicher 23 bieten jeweils Platz für maximal drei nebeneinander angeordnete Träger 12. Auch diese Speicheretagen weisen wiederum jeweils einen Speicherantrieb 16 auf, der die aufgelegten Träger 12 in horizontaler Richtung hin und her bewegen kann. Zusätzlich verfügt der Ausgabespeicher 23 noch über zwei Entladeetagen 24, an denen die Träger 12 bei Bedarf auf Ausgabebänder 25 entladen werden. Die Träger 12 werden dazu auf der Ausgabeetage 24 abgesetzt, mittels des Ausgabeantriebes 16 nach rechts bewegt und dort auf einer Kippvorrichtung 26 abgesetzt, welche die auf den Träger 12 aufgelegten Lebensmittel auf das Ausgabeband 25 abkippt. Vorteilhafterweise ist für jede zu produzierende Sorte von Lebensmittel ein Ausgabeband 25 vorzusehen, so daß über den Antrieb des befüllten Ausgabebandes 25 die Ausgabe des jeweils gewünschten Lebensmittels in besonders einfacher Weise zu steuern ist. Bei einer Anforderung eines Produktes A nur das mit dem Produkt A bestückte Ausgabeband in Gang gesetzt und ausschließlich ein Produkt des gewünschten Typs gefördert wird. An der rechten Seite der Kippvorrichtung 26 ist noch ein Anschlag 27, der verhindert, daß der leere Träger 12 auf das Ausgabeband 25 rutscht. Die jeweils rechts vom Ausgabeband 25 angeordnete Wand 28 verhindert, daß Lebensmittel unkontrolliert in den Innenraum des Ausgabespeichers 23 gelangen.

Im weiteren Verlauf gelangen die Lebensmittel dann von den Ausgabebändern 25 jeweils zu Trichtern 29, welche zum Ausgabefach 30 führen. Dort angelangt können sie von den Kunden entnommen werden. Die Steuerung der gesamten Vorrichtung erfolgt über eine Steuerungseinrichtung 31, die vorzugsweise als programmierbare elektronische Steuerung ausgeführt ist.

Nachdem die Träger 12 entleert worden sind, können sie bei Bedarf noch im Ausgabespeicher 23 vorgehalten werden. Andernfalls transportiert die zweite Erfassungsvorrichtung 22 die leeren Träger 12 zurück zum unteren Transportband 21, das sie in Richtung des Zuführspeichers 13 weiter transportiert. Damit ist ein geschlossener Kreislauf realisiert, in dem die Träger 12 umlaufen und Lebensmittel vom Zuführspeicher 13 in Richtung des Ausgabespeichers 23 transportieren.

Bei besonders großen Unterschieden in der angeforderten Stückzahl oder besonders großen Unterschiede hinsichtlich der geometrischen Abmessung der Produkte ist es vorteilhaft, wenn die Ausgabeeinrichtung je Produkt eine Ausgabestelle aufweist. So kann beispielsweise eine Ausgabestelle hinsichtlich der Ausgabe von länglichem Baguettebrot und geringeren Stückzahlen optimiert werden, wohingegen eine andere Ausgabestelle auf die geometrischen Abmessungen von Schnittbrötchen und die Ausgabe von großen Stückzahlen hin optimiert ausgelegt wird.

Für einen wirtschaftlichen Betrieb der erfindungsgemäßen Vorrichtung hat es sich als ganz besonders vorteilhaft erwiesen, wenn eine Steuerungsvorrichtung, insbesondere eine elektronische Steuerung, vorgesehen ist, die Funktionen in einem oder mehreren der Abschnitte steuert. Insbesondere programmierbare elektronische Steuerungen können bei entsprechender Programmierung auch komplexe Aufgaben mit höchster Präzision und Zuverlässigkeit erfüllen. Hierdurch ist es möglich, Personal in erheblichem Umfang einzusparen und gleichzeitig die Genauigkeit, mit der die Funktionen gesteuert werden, deutlich zu erhöhen.

Eine mögliche Funktion ist dabei die Überwachung und Steuerung der Träger. Dazu ist die Steuerungseinrichtung vorteilhafterweise mit einer Verarbeitungseinrichtung zur Verarbeitung der den Trägern zugeordneten Informationen aufgestattet. Eine solche Verarbeitungseinrichtung kann beispielsweise aus einem Rechnersystem und einer zugehörigen Software bestehen, mit deren Hilfe die Art der Beladung der Träger, deren Ort innerhalb der Vorrichtung, deren Behandlungszustand und Aufenthaltsdauer verfolgt werden. Bei einem Warenabruf oder einer Überschreitung entsprechender Zeitgrenzen kann die Steuerungseinrichtung dann entsprechende Aktionen der Fördereinrichtungen bzw. der gesamten Vorrichtung veranlassen. Wie bereits zuvor angedeutet, können je nach Wunsch unterschiedliche Kriterien definiert werden. So kann ein Steuerkriterium vorsehen, den schnellstmöglich verfügbaren Träger der Ausgabeeinrichtung zuzuführen oder ein anderes Steuerkriterium den Träger mit der Ware der gewünschten Art, welche die längste Verweildauer in der Vorrichtung aufweist, auszugeben. Noch ein anderes Steuerkriterium kann nach dem Überschreiten einer Gesamtverweildauer den Austausch bestimmter oder aller betreffenden Waren vorsehen. Dies sind selbstverständlich nur einige Beispiele für eine Vielzahl möglicher Steuerungskriterien.

Zur besseren Verarbeitung der Informationen ist an der Steuerungseinrichtung darüber hinaus eine Speichereinrichtung zur Speicherung der den Trägern zugeordneten Informationen vorgesehen. Vorteilhafterweise werden dazu bereits bei der Bestückung oder der Eingabe der bestückten Träger in einen Speicher derartige Informationen erfaßt und in der Speichereinrichtung hinterlegt. Diese Informationen können beispielsweise Art der Stückware, Uhrzeit der Aufgabe der Ware, Nummer oder Bezeichnung des beschickten Trägers und ähnliches enthalten. Darüber hinaus können aber auch im Verlauf der Verarbeitung der Ware neugenerierte Informationen hinzukommen. Wird beispielsweise eine Ware von einem Träger einer ersten Fördereinrichtung an einen Träger einer zweiten Fördereinrichtung übergeben, so ist entsprechend der eintretende Wechsel der Bezeichnungen des Trägers zu protokollieren.

Vorteilhafterweise weist die Steuerungseinrichtung eine Zeiterfassungseinrichtung zur zeitlichen Überwachung des Durchlaufs der Träger auf.

Für eine Optimierung der Verfügbarkeit der angebotenen Lebensmittel bzw. eine Vermeidung oder Minimierung von Ausschußware ist es ganz besonders vorteilhaft, wenn die Steuerungseinrichtung mit einem Programm zur Verbrauchsüberwachung und/oder -analyse ausgestattet ist. Dazu ist es besonders vorteilhaft, wenn beispielsweise über einfache Zählwerke oder in elektronischer Form von der Steuerungseinrichtung die Mengen der einzelnen umgesetzten Warenarten ermittelt werden. Dies kann in beliebigen Zeiteinheiten erfolgen, wie beispielsweise monatsweise, wochenweise, tageweise, stundenweise oder auch in kleineren Zeitinkrementen. Je kürzer dabei die Zeitdauer ist, während der ein behandeltes Lebensmittel als frisch anzusehen ist, und je länger die zur Zubereitung erforderliche Zeitdauer ist, um so effektiver wirkt sich eine solche Verbrauchsanalyse auf die Wirtschaftlichkeit einer erfindungsgemäßen Vorrichtung aus. So kann beispielsweise anhand der über einen gewissen Zeitraum ermittelten Erfahrungswerte für jeden Lebensmitteltyp ein durchschnittlicher Bedarf ermittelt werden. Hieraus kann dann ein Tagesbedarf abgeleitet werden, der als Grundlage für die Bestellmengen der täglich frisch zu liefernden Ware bildet. Ergibt die Analyse beispielsweise, daß ein Produkt A regelmäßig an einem ersten Wochentag 300-fach verkauft wird und an einem zweiten Wochentag 500-fach, so kann die am Vortag aufzugebende Bestellung für diesen Werktag entsprechend angepaßt werden. Damit ist sichergestellt, daß in der Regel die Ware in ausreichendem Maß zur Verfügung steht und entweder gar kein oder nur sehr geringer Ausschuß anfällt. Desweiteren ist es aber auch möglich, den Tagesbedarf über den Tag verteilt exakter abzuschätzen und zu decken und den im Tagesverlauf schwankenden Bedarf zu analysieren. Ergibt eine solche Analyse beispielsweise, daß ein Produkt A zu einer nachfrageschwachen Zeit, beispielsweise zwischen 13 und 16 Uhr, nur zehn mal abgerufen wird, so macht es keinen Sinn, dieses Produkt A beispielsweise mehr als zwei oder drei mal fertig zubereitet in einer Ausgabeeinrichtung vorzuhalten. Hierdurch wird erreicht, daß das Produkt fortlaufend frisch zubereitet bereitsteht. Steigt die Nachfrage hingegen beispielsweise ab 17 Uhr sprunghaft an auf beispielsweise 200 Einheiten pro Stunde, so kann die entsprechende Produktion mit einem zeitlichen Vorlauf von beispielsweise 15 Minuten bereits um 16.45 Uhr einsetzen und rechtzeitig bereitstehen. Ganz besonders geeignet ist in diesem Zusammenhang der Einsatz von selbstlernenden Programmen, die in iterativen Optimierungsschritten die produzierten Mengen im Lauf der Zeit immer genauer an den tatsächlichen Bedarf annähern, ohne daß ein Bediener hierzu erforderlich ist.

Neben der schwankenden Nachfrage nach einem einzelnen Produkt, kann auf diese Weise auch die schwankende Nachfrage zwischen zwei oder mehr Produkten berücksichtigt werden. So kann beispielsweise beim Vorliegen einer Hauptnachfragezeit am Morgen und einer weiteren Hauptnachfragezeit am Abend berücksichtigt werden, wenn morgens überwiegend das Produkt A und nur wenig das Produkt B nachgefragt wird, wohingegen abends nur wenig vom Produkt A und überwiegend das Produkt B nachgefragt wird. Mit einer solchen Verbrauchsüberwachung und -analyse, die vorzugsweise ebenfalls selbstlernend, d. h. dynamisch, ausgelegt ist, kann damit die produzierte bzw. vorproduzierte Menge an Lebensmitteln in der für jeden einzelnen Verkaufsstandort individuell optimierten Weise gesteuert werden.

Für die Bedienung einer erfindungsgemäßen Vorrichtung ist es darüber hinaus vorteilhaft, wenn die Steuerungseinrichtung Ausgabemittel zur Ausgabe oder Anzeige eines vorhandenen Vorrats aufweist. Die Anzeige des Vorrats kann beispielsweise in absoluten Zahlen oder in Form einer verbleibenden Restdauer für die jeweiligen Lebensmittelarten erfolgen. Ein Bediener kann dann erkennen, wieviel Stück eines bestimmten Produktes noch vorhanden sind bzw. wie lange der vorhandene Vorrat noch ausreichen wird.

Da auch Energiekosten einen signifikanten Anteil an den Betriebskosten einer erfindungsgemäßen Vorrichtung ausmachen, ist es besonders günstig, wenn die Steuerungseinrichtung mit dem Backofen verbunden ist, um daran angeordnete Heizvorrichtungen zeitweise still zu setzen. Damit kann bei längeren nachfragelosen bzw. nachfragearmen Zeiten der Energieverbrauch der Vorrichtung deutlich gesenkt werden.

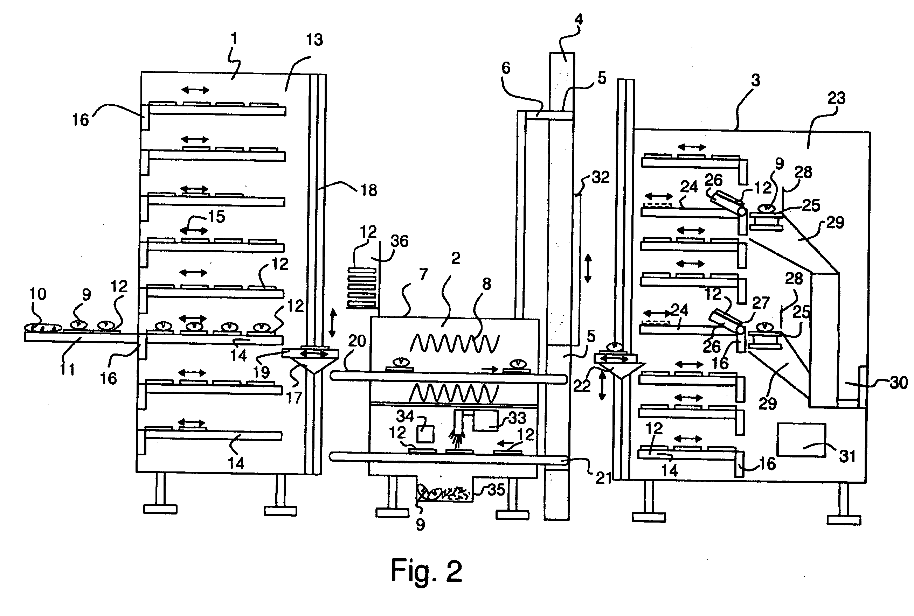

Die Figur 2 zeigt eine andere erfindungsgemäße Ausführungsform der Erfindung, die wiederum in einer seitlichen Schnittansicht dargestellt ist. Der Aufbau des Zuführspeichers 13 und des Ausgabespeichers 23 entspricht weitestgehend der unter Figur 1 zuvor beschriebenen Anordnung. Zusätzlich weist diese Ausführungsform an der Wand 4 eine Feuerschutzeinrichtung 32 auf. Die Feuerschutzeinrichtung 32 besteht aus einer in vertikaler Richtung nach unten verfahrbaren Tür, die im Brandfall automatisch verfährt und dabei die untere Verbindungsöffnung 5 vollständig verschließt. Dies ist beispielsweise dann erforderlich, wenn verkaufsraumseitig oder lagerseitig brennbare Waren, wie beispielsweise Feuerwerkskörper oder Brennstoffe, gelagert werden. Auf diese Weise wird ein Übergreifen eines gegebenenfalls auftretenden Feuers durch die Verbindungsöffnung 5 auf den benachbarten Raum wirksam vermieden. Selbstverständlich kann die Feuerschutzeinrichtung 32 auch so ausgeführt sein, daß sie gleichzeitig, sowohl die untere, als auch die obere Verbindungsöffnung 5 im Brandfall verschließt.

Desweiteren ist im Transportkreislauf dieser Ausführungsform eine zusätzliche Reinigungseinrichtung 33 sowie eine Entladeeinrichtung 34 vorgesehen. Beide Einrichtungen befinden sich im unteren Bereich des Durchlaufbackofens 7 direkt oberhalb des unteren Transportbandes 21. Mittels der Reinigungseinrichtung 23 können die zurücklaufenden leeren Träger 12 von Verschmutzungen gereinigt werden, die sich dann in einem Sammelbehälter 35 unterhalb des Durchlaufbackofens 7 ansammeln. Daneben können aber auch überalterte Lebensmittel, wie beispielsweise Schnittbrötchen 9, die zu lange im Ausgabespeicher 23 verblieben sind, mittels der als Schieber ausgebildeten Entladeeinrichtung 34 von den Trägern 12 entnommen werden. Diese sammeln sich dann ebenfalls in dem unterhalb des Durchlaufbackofens 7 angeordneten Sammelbehälters 35 an. Auf diese Weise kann die Reinigung und Entladung der Träger 12 weitestgehend automatisiert werden. Zur Vereinfachung der Bedienung ist zudem vorgesehen, daß die erste Erfassungsvorrichtung 17 die an der linken Seite des unteren Transportbandes 21 angelangten Träger 12 aufnimmt und sie in einem weiteren als Leerträgerspeicher 36 ausgebildeten Speicher ablegt. Dort kann ein Bediener die gereinigten und entleerten Träger 12 aufnehmen, um sie am Aufgabetisch 11 erneut zu bestücken und in den Zuführspeicher 13 einzugeben. Selbstverständlich stehen zahlreiche verschiedene Möglichkeiten zur Verfügung, um die Reinigungseinrichtung 33 bzw. die Entladeeinrichtung 34 zu realisieren. Neben dem Einsatz des beschriebenen Schiebers kann die Entnahme der Lebensmittel auch durch einfaches Kippen des Trägers 12 erfolgen. Darüber hinaus kann die Reinigung der Träger neben der dargestellten Verwendung eines Druckluft- bzw. Wasserstrahls auch die Verwendung von Bürsten erfolgen.

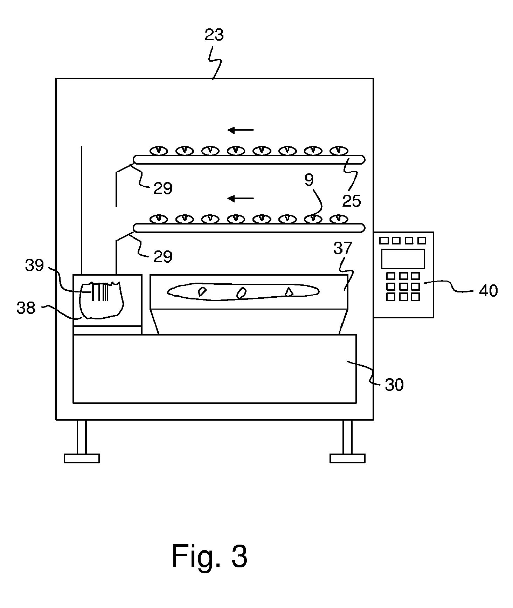

In Figur 3 ist ein Ausgabespeicher 23 in einer Frontansicht dargestellt. Die dahinterliegenden Verbindungsöffnungen 5 werden von dem im Verkaufsbereich liegenden Ausgabespeicher 23 vollständig verdeckt. Bei dieser Ausführungsform weist der Ausgabespeicher 23 einen Speicher zur Aufnahme der Träger 12 und eine Ausgabeeinheit mit zwei übereinanderliegenden Ausgabebänder 25 für Schnittbrötchen 9 auf. Zur Vereinfachung wurde auf die Darstellung von Details des Speichers verzichtet. Ebenfalls zur Ausgabeeinheit gehört eine Ausgabeklappe 37 für Baguettebrot 10, die bei dieser Ausführungsform unterhalb der Ausgabebänder 25 angeordnet ist. Die Ausgabeklappe 37 kann anstelle oder zusätzlich zu den Ausgabebändern 25 vorgesehen werden und eignet sich besonders zur Ausgabe von länglichen Lebensmitteln. Bei einer Anforderung von Schnittbrötchen 9 transportiert das Ausgabeband 25 diese in Pfeilrichtung nach links, von wo sie über den Trichter 29 in eine Verpackungseinrichtung 38 gelangen. Dort werden sie in eine Tüte befördert.

Um die Erkennung der ausgegebenen Lebensmittel zu erleichtern, ist an der Ausgabeeinrichtung eine Vorrichtung zur Erzeugung von Informationsträgern, insbesondere von Etiketten, Barcodes oder Aufdrucken, vorgesehen. Diese Informationsträger können beispielsweise an den Kassen von Supermärkten automatisch von Kassensystemen oder manuell von Kassierern eingelesen werden. Eine zeitaufwendig manuelle Erfassung der Waren, beispielsweise durch Prüfen der Warenart und Nachzählen bzw. Nachwiegen, entfällt damit. Ausgabeeinrichtungen können dazu mit Laser-, Tintenstrahl- oder Thermotransferdrucker ausgestattet sein. Die Informationen können direkt auf Verpackungen, wie beispielsweise Tüten oder Kartonagen, oder aber auf Etiketten aufgedruckt werden. Selbstverständlich ist es auch denkbar, andere Informationsträger, wie elektronische Datenträger, zu erzeugen und auf der Verpackung der Ware anzubringen bzw. separat auszugeben und vom Kunden aufbringen zu lassen. Die Informationsträger werden vorliegend auf der Tüte in Form eines Barcodes 39 angebracht. In ähnlicher Weise kann auch das Baguettebrot 10 in eine Papiertüte oder Kartonage verpackt und ausgegeben werden. Bei der dargestellten Ausführungsform wird das Baguettebrot 10 allerdings direkt in das manuelle Ausgabefach 30 freigegeben. Bei der Ausgabe in ein manuelles Ausgabefach 30 handelt es sich um eine konstruktiv besonders einfache und preiswerte Ausführungsform. Aus hygienischen Gründen und für die Kunden ansprechender ist dagegen eine etwas aufwendigere Befüllvorrichtung, welche die angeforderten Lebensmittel, wie beispielsweise Brötchen, direkt in Tüten oder Kartonagen verpackt.

An der rechten Seite der Ausgabeeinrichtung befindet sich noch ein Bedienteil 40, über die der Kunde die gewünschte Art und Anzahl von Backwaren eingeben kann. Daneben kann das Bedienteil 40 aber auch Zahlungsfunktion, z. B. für Bargeld oder Kartenzahlungen, übernehmen oder sonstige Datenträger oder Schlüssel einlesen.

Das Bedienteil 40 dient so zur Eingabe von Zahlungsmitteln oder von kundenabhängigen Informationen. Diese kundenabhängigen Informationen können beispielsweise in Form von Kontodaten, Bargeldeinheiten, Namen und Paßwörter, Vorbestellungsnummern oder Entnahmemengen umfassen. Damit können beispielsweise Gastronomen oder Hotelbesitzer unabhängig von Ladenöffnungszeiten auf frische Lebensmittel zugreifen. Eine Abrechnung kann dann etwa über vorher eingerichtetes Konto erfolgen. Daneben ist es aber auch möglich die Produkte über die Ausgabeeinheit an normale Straßenkundschaft, beispielsweise gegen Barzahlung oder Kartenzahlung, abzugeben.

Bei erfindungsgemäßen Vorrichtungen mit besonders hoher Kapazität und besonders hoher Verkaufsleistung ist es auch sinnvoll, daß an einer Vorrichtung gleichzeitig mehrere Ausgabeeinrichtungen angeordnet sind. Auf diese Weise können beispielsweise zwei Kunden gleichzeitig Waren aus einem oder mehreren Speichern abrufen, wodurch eine Bildung langer Warteschlangen vermieden wird.

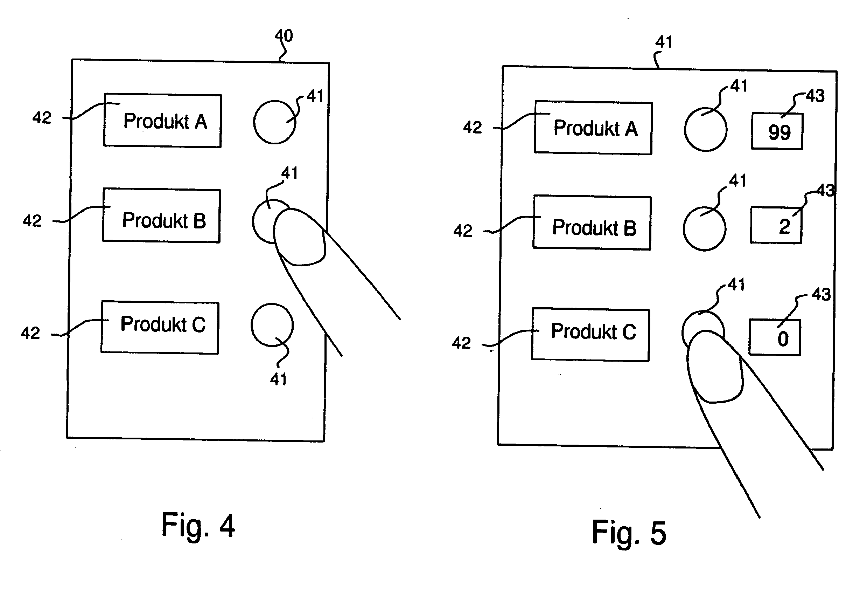

In Figur 4 ist eine mögliche Ausführungsform eines erfindungsgemäßen Bedienteils in einer vergrößerten Vorderansicht dargestellt. Die Bedienung kann im einfachsten Fall durch mehrmaliges Betätigen eines Bedienelements 41 erfolgen, wobei die Anzahl der Betätigungen der Anzahl der gewünschten Menge entspricht und das Bedienelement selbst die Produktart wiedergibt. Es sind aber auch andere Lösungen möglich, wie beispielsweise Schalter, mit denen die Förderung des gewünschten Produktes angestellt und nach Erreichen der gewünschten Fördermenge wieder abgestellt wird. Weiterhin ist es denkbar, eine Tastatur vorzusehen, über die die Menge und Art eingegeben wird oder Münz- oder Kartenlesegeräte, wobei anhand der Münzen oder Karten oder sonstige Informationsträger, die Art und Menge der gewünschten Produkte erkennbar ist.

Jedem Bedienelement 41 ist ein Informationsträger 42 zugeordnet, anhand dessen der Bediener erkennen kann, welches Produkt er mit dem jeweiligen Bedienelement auswählt. Der Informationsträger 42 ist beispielsweise ein von der Rückseite aus wechselbares Schild, daß bei einem Produktwechsel einfach austauschbar ist.

In Figur 5 ist ein Bedienteil 40 in einer vergrößerten Ansicht dargestellt, bei dem zusätzlich Anzeigeeinrichtungen 43 vorgesehen sind, welche dem Bediener Informationen über die Anzahl der jeweils selektierten Produkte liefert. Hierbei stehen verschiedene Möglichkeiten zur Auswahl, den Ausgabevorgang zu starten. Eine Möglichkeit besteht darin, die Ausgabe unmittelbar nach dem ersten Betätigen eines Bedienelementes 41 zu starten. Eine andere Alternative sieht vor, die Art und Anzahl der Produkte zunächst durch entsprechendes Betätigen der Bedienelemente 41 vorzuwählen und die Ausgabe erst im Anschluß daran, beispielsweise nach dem Verstreichen einer vorgegebenen Zeitdauer ohne weitere Eingabe, zu starten. Dies hat den Vorteil, daß, wenn zwei unterschiedliche Brötchensorten ausgegeben werden, diese zusammen in einer Tüte eingefüllt werden können. Hierdurch kann bereits eine Tüte eingespart werden. Zudem kann auch zwischen großen und kleinen Verpackungseinheiten, wie beispielsweise Groß- und Kleintüten, differenziert werden, wodurch sich ebenfalls Einsparungen umsetzen lassen.

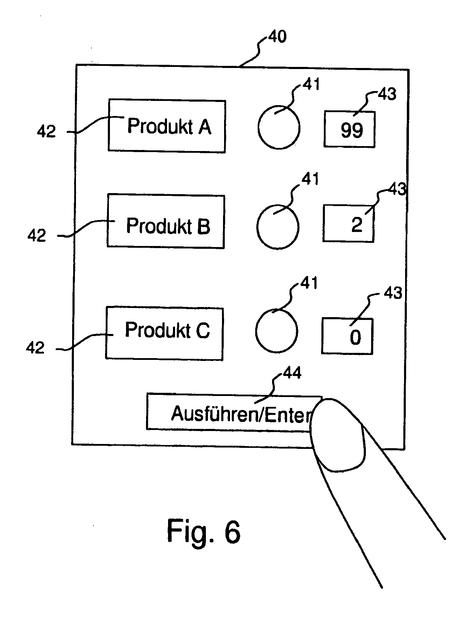

Das in Figur 6 dargestellte Bedienteil 40 schließlich weist eine zusätzliche Eingabetaste 44 auf. Dabei kann der Bediener zunächst in Ruhe die Anzahl der gewünschten Produkttypen durch Betätigen der Bedienelemente 41 vorgeben. Erst nachdem die Eingabe in der gewünschten Weise erfolgt ist, löst er durch Betätigen der Eingabetaste 44 die Ausgabe der Produkte aus. Diese Art der Bedienung setzt den Bediener weniger unter Zeitdruck und dürfte insbesondere bei älteren Menschen oder Menschen mit körperlichen Behinderungen, wie etwa Sehschwächen, als angenehmer empfunden werden. Zusätzlich ist es auch möglich, noch eine Korrekturtaste vorzusehen, mit der evtl. vorgenommene Fehleingaben löschbar sind.

Die vorliegende Erfindung ist nicht auf die dargestellten Ausführungsbeispiele beschränkt. Es sind vielmehr zahlreiche Abwandlungen im Rahmen der Patentansprüche möglich. So kann beispielsweise die dargestellte bauliche Trennung in Form der Wand zwischen dem ersten und zweiten Abschnitt liegen, aber auch zwischen dem zweiten und dritten oder beliebigen anderen Abschnitten. Darüber hinaus versteht der Fachmann, daß neben den dargestellten Transport- und Fördereinrichtungen zahlreiche andere Ausführungsformen und -arten bekannt und geeignet sind, um eine Verbindung durch die Verbindungsöffnung 5 zwischen den Abschnitten herzustellen. In besonders einfachen Ausgestaltungen kann auch nur eine einzige Fördereinrichtung für alle Abschnitte vorgesehen sein. Auch können die Träger in unterschiedlichster Weise hergestellt werden, wie z.B. als Drahtkörbe, Metallgußteil oder Kunststoffteile aus hitzebeständigem Kunststoff. Neben der beschriebenen Verwendung der erfindungsgemäßen Vorrichtung für Backwaren kann sie aber auch im Zusammenhang mit anderen Waren, wie etwa Wurstware, Lebensmittelkonserven, Fertiggerichten und ähnlichem eingesetzt werden.

## Patentansprüche

1. Vorrichtung zur Lagerung, Behandlung und Ausgabe von Backwaren, mit einer Mehrzahl unabhängiger, nicht miteinander verbundener Träger (12) zur Aufnahme der Backwaren (9, 10), einem Zufuhrspeicher (13) für die Träger (12) mit einer Mehrzahl von Speicherplätzen zum Verteilen, Speichern und Bereithalten von Trägern (12) im Zufuhrspeicher (13), einem Ausgabespeicher (23) für die Träger (12) mit einer Mehrzahl von Speicherplätzen zum Speichern und Vorhalten von Trägern (12) im Ausgabespeicher (23), einem Backofen (7) zwischen dem Zufuhrspeicher (13) und dem Ausgabespeicher (23) sowie einer Fördereinrichtung (17, 20, 21, 22) für die unabhängigen Träger (12), bei der die Fördereinrichtung (17, 20, 21, 22) einen geschlossenen Transportkreislauf für die Träger (12) vom Zufuhrspeicher (13) durch den Backofen (7) zum Ausgabespeicher (23) und zurück zum Zufuhrspeicher (13) realisiert.

2. Vorrichtung nach Anspruch 1, **dadurch gekennzeichnet, dass** der Backofen (7) als Durchlaufbackofen (7) ausgebildet ist.

3. Vorrichtung nach einem der vorhergehenden Ansprüche, **dadurch gekennzeichnet, dass** wenigstens einer der Speicher klimatisiert ist.

4. Vorrichtung nach einem der vorhergehenden Ansprüche, **dadurch gekennzeichnet, dass** der Zufuhr- bzw. der Ausgabespeicher (13; 23) mehrere übereinanderliegende Etagen aufweist.

5. Vorrichtung nach einem der vorhergehenden Ansprüche, **dadurch gekennzeichnet, dass** die Fördereinrichtung im Bereich des Backofens (7) als Förderband (20, 21), -gurt oder -kette ausgebildet ist.

6. Vorrichtung nach einem der vorhergehenden Ansprüche, **dadurch gekennzeichnet, dass** die Träger (12) bei jedem vollständigen Durchlauf des Transportkreislaufs zumindest einmal den Heißbereich des Backofens (7) durchlaufen.

7. Vorrichtung nach einem der vorhergehenden Ansprüche, **dadurch gekennzeichnet, dass** die Fördereinrichtung zumindest eine Erfassungseinrichtung (17, 22) aufweist, die einen oder mehrere Träger (12) im Zufuhr- bzw. Ausgabespeicher (13; 23) gezielt aufnehmen oder abgeben kann.

8. Vorrichtung nach einem der vorhergehenden Ansprüche, **dadurch gekennzeichnet, dass** zumindest zwischen zwei Abschnitten (2, 3), insbesondere zwischen dem Backofen (7) und dem Ausgabespeicher (23), eine bauliche Trennung (4) mit einer Verbindungsöffnung (5) angeordnet ist.

9. Vorrichtung nach einem der vorhergehenden Ansprüche, **dadurch gekennzeichnet, dass** zumindest zwischen zwei Abschnitten (2, 3), insbesondere zwischen dem Backofen (7) und dem Ausgabespeicher (23), eine selbsttätig wirkende Feuerschutzeinrichtung (32) angeordnet ist.

10. Vorrichtung nach einem der vorhergehenden Ansprüche, **dadurch gekennzeichnet, dass** eine Trägerentnahmevorrichtung (17, 36) vorgesehen ist, welche die im Transportkreislauf umlaufenden Träger (12) aus dem Transportkreislauf entnimmt.

11. Vorrichtung nach einem der vorhergehenden Ansprüche, **dadurch gekennzeichnet, dass** Mittel (34) zum automatisierten Entleeren der Träger (12) vorgesehen sind.

12. Vorrichtung nach einem der vorhergehenden Ansprüche, **dadurch gekennzeichnet, dass** der Transportkreislauf der Fördereinrichtung durch eine Reinigungseinrichtung (33), insbesondere ein Reinigungsbad, führt.

13. Verfahren zur Lagerung, Behandlung und Ausgabe von Backwaren, bei dem die Backwaren einer Behandlung zur Erlangung eines genussfertigen Zustands für die Ausgabe unterzogen werden, wobei die Backwaren auf eine Mehrzahl unabhängiger, nicht miteinander verbundener Träger (12) verteilt werden, danach die bestückten Träger (12) in einem Zufuhrspeicher (13), der eine Mehrzahl von Speicherplätzen zum Verteilen und Speichern von Trägern (12) aufweist, vorgehalten und bei Bedarf mittels einer Fördereinrichtung (17, 20, 21, 22) einem Backofen (7) zur Zubereitung zugeführt werden, um danach in einem zusätzlichen Schritt in einem Ausgabespeicher (23), der ebenfalls eine Mehrzahl von Speicherplätzen zum Speichern von Trägern (12) aufweist, für die Ausgabe der Backwaren vorgehalten zu werden, bei dem die bei der Ausgabe der Backwaren geleerten Träger (12) in einem geschlossenen Transportkreislauf anschließend zum Zufuhrspeicher (13) zurückbewegt werden.

14. Verfahren nach dem vorhergehenden Anspruch, **dadurch gekennzeichnet, dass** ein Teil der Verfahrensschritte auf einer ersten Seite einer baulichen Trennung (4) ausgeführt werden und die übrigen Verfahrensschritte auf der anderen Seite der baulichen Trennung (4) ausgeführt werden.

## Claims

1. A device for storing, treating and dispensing baked goods, having a plurality of independent supports (12) not connected to each other for receiving the baked goods (9, 10), a feeding storage (13) for the supports (12) having a plurality of storage spaces for distributing, storing, and holding ready supports (12) in the feeding storage (13), a dispensing storage (23) for the supports (12) having a plurality of storage spaces for storing and having available supports (12) in the dispensing storage (23), a baking oven (7) between the feeding storage (13) and the dispensing storage (23), as well as a transport device (17, 20, 21, 22) for the independent supports (12), wherein the transport device (17, 20, 21, 22) creates a closed transportation circuit for the supports (12) from the feeding storage (13) through the baking oven (7) to the dispensing storage (23) and back to the feeding storage (13).

2. Device according to Claim 1 **characterized in that** the baking oven (7) is designed as a continuous baking oven (7).

3. Device according to one of the previous claims **characterized in that** at least one of the storages has a controlled climate.

4. Device according to one of the previous claims **characterized in that** the feeding storage or the dispensing storage (13; 23) has several levels on top of one another.

5. Device according to one of the previous claims **characterized in that** the transport device has been executed as a conveyor band (20, 21), conveyor belt or chain in the baking oven area (7).

6. Device according to one of the previous claims **characterized in that** the supports (12) run through the heating area of the baking oven (7) at least once every time they pass fully through the transportation cycle.

7. Device according to one of the previous claims **characterized in that** the transport device is equipped with at least one collection device (17, 22) that can selectively receive or deliver one or more supports (12) in the feeding storage or the dispensing storage (13; 23).

8. Device according to one of the previous claims **characterized in that** a structural separation (4) with a connecting opening (5) has been arranged between at least two sections (2, 3), particularly between the baking oven (7) and the dispensing storage (23).

9. Device according to one of the previous claims **characterized in that** an autonomous, self-activating fire protection device (32) has been arranged between at least two sections (2, 3), particularly between the baking oven (7) and the dispensing storage (23).

10. Device according to one of the previous claims **characterized in that** a support-receiving device (17, 36) has been provided to take off the supports (12) circulating in the transportation cycle.

11. Device according to one of the previous claims **characterized in that** media (34) are provided for the automated emptying of the supports (12).

12. Device according to one of the previous claims **characterized in that** the transportation cycle of the transport device runs through a cleaning device (33), especially a cleaning bath.

13. A process for storing, treating and dispensing baked goods, in which the baked goods are subject to a treatment so they reach a state ready for consumption and dispensing, wherein the baked goods are distributed among numerous independent supports (12) not connected to each other, afterwards the supports (12) equipped like that are kept in a feeding storage (13) having a plurality of storage spaces for distributing and storing supports (12), and when requested are fed with the help of a transport device (17, 20, 21, 22) to a baking oven (7) for preparation, in order to be kept in an additional step in a dispensing storage (23) for dispensing the baked goods and also having a plurality of storage spaces for storing supports (12), in which case the supports (12) emptied during dispensing of the baked goods are subsequently moved back to the feeding storage (13) within a closed transportation circuit.

14. Process according to the previous claim **characterized in that** a part of the process steps are executed on a first side of a structural separation (4) and the remaining process steps are executed on the other side of the structural separation (4).

## Revendications

1. Dispositif pour le stockage, le traitement et la distribution de produits de boulangerie et de pâtisserie, avec une multitude de supports (12) indépendants non reliés les uns avec les autres pour accueillir les produits de boulangerie et de pâtisserie (9, 10), un réservoir d'alimentation (13) pour les supports (12) avec une multitude d'emplacements de stockage pour la distribution, le stockage et la mise à disposition de supports (12) dans le réservoir d'alimentation (13), un réservoir de sortie (23) pour les supports (12) avec une multitude d'emplacements de stockage pour le stockage et la mise à disposition de supports (12) dans le réservoir de sortie (23), un four (7) entre le réservoir d'alimentation (13) et le réservoir de sortie (23) ainsi qu'un dispositif de transport (17, 20, 21, 22) pour les supports (12) indépendants, dans lequel le dispositif de transport (17, 20, 21, 22) réalise un circuit de transport fermé pour les supports (12) allant du réservoir d'alimentation (13) à travers le four (7) vers le réservoir de sortie (23) et rentrant au réservoir d'alimentation (13).

2. Dispositif selon la revendication 1, **caractérisé en ce que** le four (7) se présente sous la forme d'un four continu (7).

3. Dispositif selon l'une quelconque des revendications précédentes, **caractérisé en ce que** l'un au moins des réservoirs est climatisé.

4. Dispositif selon l'une quelconque des revendications précédentes, **caractérisé en ce que** le réservoir d'alimentation ou le réservoir de sortie (13; 23) comporte plusieurs étages disposés les unes au-dessus des autres.

5. Dispositif selon l'une quelconque des revendications précédentes, **caractérisé en ce que** le dispositif de transport se présente, dans la zone du four (7), sous la forme d'une bande de transport (20, 21), d'une courroie de transport ou d'une chaîne de transport.

6. Dispositif selon l'une quelconque des revendications précédentes, **caractérisé en ce que** les supports (12) parcourent au moins une fois la zone chaude du four (7) à chaque passe intégrale à travers le circuit de transport.

7. Dispositif selon l'une quelconque des revendications précédentes, **caractérisé en ce que** le dispositif de transport comporte au moins un dispositif de saisie (17, 22), qui est capable de saisir ou de délivrer de manière ciblée un ou plusieurs supports (12) dans le réservoir d'alimentation ou le réservoir de sortie (13, 23).

8. Dispositif selon l'une quelconque des revendications précédentes, **caractérisé en ce qu'**une séparation physique (4) avec une ouverture de liaison (5) est disposée au moins entre deux sections (2, 3), particulièrement entre le four (7) et le réservoir de sortie (23).

9. Dispositif selon l'une quelconque des revendications précédentes, **caractérisé en ce qu'**un dispositif de protection antifeu à action automatique (32) est disposée au moins entre deux sections (2, 3), particulièrement entre le four (7) et le réservoir de sortie (23).

10. Dispositif selon l'une quelconque des revendications précédentes, **caractérisé en ce qu'**il est prévu un dispositif de prélèvement de supports (17, 36), qui prélève du circuit de transport les supports (12) circulant sur ledit circuit de transport.

11. Dispositif selon l'une quelconque des revendications précédentes, **caractérisé en ce que** des moyens (34) sont prévus pour le vidage automatisé des supports (12).

12. Dispositif selon l'une quelconque des revendications précédentes, **caractérisé en ce que** le circuit de transport du dispositif de transport parcourt un dispositif de nettoyage (33), en particulier un bain de nettoyage.

13. Procédé pour le stockage, le traitement et la distribution de produits de boulangerie et de pâtisserie, dans lequel les produits de boulangerie et de pâtisserie sont soumis à un traitement pour l'acquisition d'un état prêt à la consommation en vue de la distribution, sachant que les produits de boulangerie et de pâtisserie sont répartis sur une multitude de supports (12) indépendants non reliés les uns avec les autres, que les supports (12) chargés sont ensuite mis à disposition dans un réservoir d'alimentation (13) comportant une multitude d'emplacements de stockage pour la distribution et le stockage de supports (12) et, en cas de besoin, délivrés au moyen d'un dispositif de transport (17, 20, 21, 22) à un four (7) pour la préparation, pour, ensuite, dans une étape supplémentaire, être mis à disposition dans un réservoir de sortie (23) présentant également une multitude d'emplacements de stockage pour le stockage de supports (12) en vue de la distribution des produits de boulangerie et de pâtisserie, dans lequel les supports (12) vidés lors de la délivrance des produits de boulangerie et de pâtisserie sont ensuite réacheminés au réservoir d'alimentation (13) dans un circuit de transport fermé.

14. Procédé selon la revendication précédente, **caractérisé en ce qu'**une partie des étapes du procédé est exécutée sur un premier côté d'une séparation physique (4) et que les autres étapes du procédé sont exécutées de l'autre côté de la séparation physique (4).
